# EUROPEAN PATENT SPECIFICATION

(11) **EP 1 479 298 B1**
(45) Date of publication and mention of the grant of the patent: **27.12.2006**
(21) Application number: 04005475.1
(22) Date of filing: 08.03.2004
(51) Int. Cl.: A22C 11/08

(54) **Stuffing machine for soft pastes**
Füllmaschine für weiche Paste
Machine de bourrage pour des pâtes souples

(30) Priority: 19.05.2003 EP 03011373
(43) Date of publication of application: 24.11.2004
(73) Proprietor: Antonio Borgo & C. S.A.S., 36016 Thiene (Vicenza) (IT)
(72) Inventor: Borgo, Antonio, 36016 Thiene (Vicenza) (IT)
(74) Representative: Grünecker, Kinkeldey, Stockmair & Schwanhäusser Anwaltssozietät

(56) References cited:
- WO-A-97/04659
- FR-A- 1 252 622
- US-A- 5 158 498

## Description

The present invention relates to the preparation of food products. In particular, the present invention relates to the preparation of stuffed food products. In more detail, the present invention relates to a feed hopper of the kind used for feeding stuffing machines with soft pastes containing meat or vegetables, such as for example, pastes for mortadellas, or stuffed products in general, but also soft pastes containing vegetables such as soya, or the like. Furthermore, the present invention relates to a device for working and/or processing soft pastes. Moreover, the present invention relates to stuffing machines for working and/or processing soft pastes containing meat or vegetables, equipped with such a feeding hopper and/or with such a device.

### DESCRIPTION OF THE PRIOR ART

It is known that traditional or common stuffed products such as salami and in particular mortadelles or bologna sausages, are prepared by filling a tubular food casing with a soft paste containing meat. The tubular food casing may be a casing originating from animals or a rubber or synthetic casing, for instance containing collagen. The food casing is filled with a predefined amount of paste and ties or clips are applied to the end portions of the filled casing so as to realize stuffed products having predefined dimensions. In particular, the stuffing operation is executed by using stuffing machines adapted to this end, wherein the paste is properly worked and/or processed by means of devices adapted to this end; moreover the paste processed inside the stuffing machine is emitted and/or delivered through a stuffing or delivering horn or tube over which the tubular food casing has been previously placed or fitted like a sock so that said casing is filled by the paste exiting the stuffing machine through the stuffing tube. In the case of mortadelles, once the stuffing operations described above have been completed, these are subsequently cooked and/or boiled and sent for maturing.

During the years, for the purpose of meeting and/or accomplishing the exigencies of the consumers, the producers of sausages or stuffed products in general were oriented toward using stuffing machines comprising essentially two different pumps disposed in sequence between a feeding hopper for feeding the stuffing machine with the meat paste and the delivering tube or horn of the stuffing machine. Usually, the pump disposed upstream between the hopper and the horn in the advancing direction of the paste is of the kind comprising a screw, for instance an endless or metering screw; the second pump, ie. the pump placed downstream in the advancing direction of the paste, is adapted to push the soft paste through the delivering tube of the stuffing machine and is usually a positive-displacement pump, for instance, comprising a rotatable body equipped with blades. Moreover, such a means are also provided for the purpose of removing air so as to avoid that air is trapped inside the filled casing and air pockets, voids, wrinkles or creases are formed which could reduce the quality of the final stuffed products.

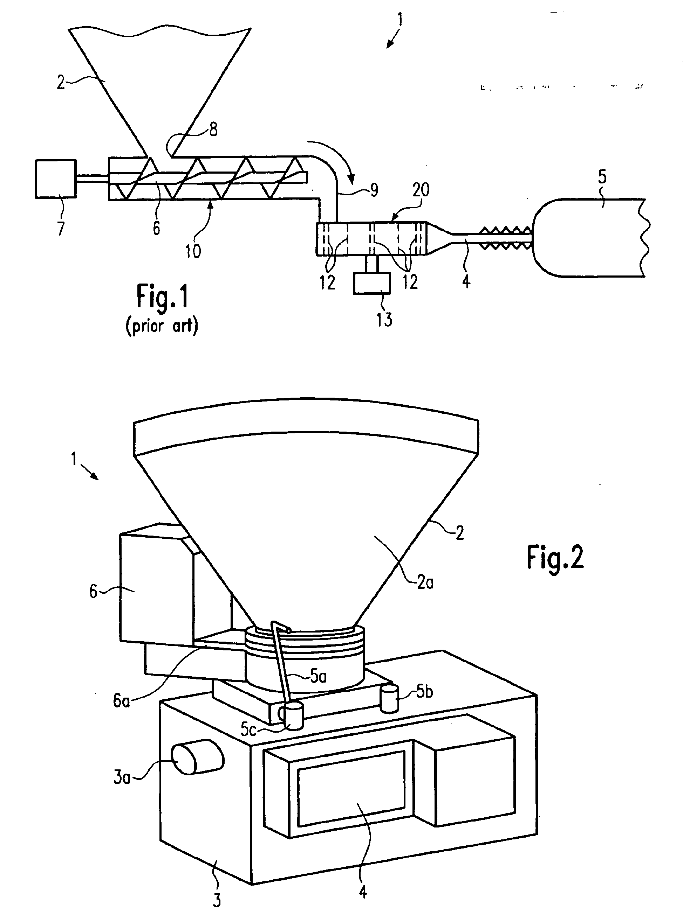

In the following, a description will be given with reference to Fig. 1 of a stuffing machine known in the art.

The known stuffing machine depicted schematically in Fig. 1 and identified by the reference number 1 comprises essentially a feeding hopper 2 adapted to be loaded with a soft paste and an exit tube or horn 4 for exiting and/or delivering the paste. As anticipated above, a tubular food casing 5 is placed over the tube 4 or fitted onto the tube 4 like a sock. Two pumps are disposed along the path of the paste from the feeding hopper to the exiting tube 4, namely a first pump 10 and a positive-displacement pump 20. The pump 10 is equipped with an endless screw 6 which is actuated by a motor 7 and comprises a loading or inlet aperture or mouth 8 and an outlet or exiting aperture or mouth 9. The inlet mouth 8 is placed in proximity to the bottom of the hopper 2 so as to connect the pump 10 with the hopper 2; the outlet or exiting aperture or mouth 9 is connected to the inlet of the positive-displacement pump 20. Moreover, the pump 20 comprises a rotor equipped with radial blades 12 and these are actuated by means of a motor 13.

In the known stuffing machine depicted in Fig. 1, the soft paste is loaded into the hopper 2 and pushed by the pump 10 into the positive-displacement pump 20 and than advanced by the pump 20 towards the delivering tube 4 so as to be delivered through the tube; in this way, the tubular casing 5 is filled with the paste exiting through the tube 4.

The known stuffing machines of the kinds depicted in Fig. 1 are affected by several disadvantages.

First of all, in view of the reciprocal disposition of the hopper 2 and the pump 10 comprising an endless screw, the pump 10 may not be adequately fed with the soft paste. In fact, due to the fact that the paste may have a certain consistency, it may happen that the paste adheres to or hangs on the wall of the hopper 2. Accordingly, the paste is not collected by the screw 6 during rotation so that at least a portion of the paste inside the hopper cannot be discharged into the pump 10 through the outlet mouth or aperture 8 but remains trapped inside the hopper 2. Intervention of the operator is therefore requested, who must push the paste by hand from the top to the bottom of the hopper through the loading aperture 8 so as to allow the paste to be collected by the endless screw and advanced into the positive-displacement pump 20. When this operation is requested, the stuffing operations must be temporarily stopped; this, however, drastically increases the working time.

Moreover, even the feeding of the positive-displacement pump 20 by means of the pump 10 comprising the endless screw 6 is affected by several disadvantages. It arises in fact that also the positive-displacement pump 20 is not always adequately fed with the paste; this is due in particular to the fact that the pump 10 is disposed or placed in a horizontal position so that the paste is not discharged from the pump 10 through a linear path; in particular, for entering into the positive-displacement pump 20, the paste is forced to go along a curved path (see Fig. 1). When the positive-displacement pump 20 is not adequately fed, the stuffing operation is slowed down accordingly.

Moreover, due to the fact that the pump 10 comprising the endless screw 6 is placed in a horizontal position and upstream with respect to the positive-displacement pump 20 (in the advancing direction of the soft paste from the hopper to the exit tube 4), the air suction means (not depicted in Fig. 1) provided for removing the air from the pump does not always accomplish this task properly; in particular, this is due to the high rotation speed of the positive-displacement pump 20. It arises therefore that air remains quite often trapped inside the paste, so that the fat components of the paste are given a white like colour, particularly disliked by the consumers. Moreover, the trapped air originates air pockets and/or air bubbles in the final stuffed products so that the final stuffed products do not show the desired uniformity and compactness; this in turn originates the problem that, when the final stuffed products are sliced before being consumed, the slice comprises a plurality of micro holes, which gives the slices a poor quality and appearance.

Finally, due to the fact that both pumps, namely the pump comprising the endless s crew a nd the positive-displacement pump are placed inside the stuffing machine, the stuffing machine needs to be very bulky; accordingly the overall dimensions of the stuffing machine do not allow the machine to be used in small rooms or in those situations in which only a small place it at disposal.

There is also known from document FR-A-1252622 a device for processing soft pastes comprising advancing means defined by a first and a second rotating element so that the soft pastes are advanced along two advancing directions substantially parallel to the two axis of rotation of said first and second rotating element.

In view of the situation as described above, it would be desirable to provide a machine for the preparation of food products allowing to overcome or at least to limit the disadvantages affecting the prior art machines. In particular, it would be desirable to provide a stuffing machine and/or a feeding hopper for stuffing machines allowing to overcome or at least to limit the disadvantages affecting the prior art stuffing machine described above. It would be desirable to provide a stuffing machine and/or a feed hopper for stuffing machines, allowing to adequately remove or evacuate the air from the paste during the stuffing operation. It would also be desirable to provide a stuffing machine and/or a feed hopper allowing to adequately convey the soft paste toward the outlet tube or horn so as to minimize the need for an operator intervening during the stuffing operations.

### SUMMARY OF THE PRESENT INVENTION

In general, the present invention relates to the preparation of food products. In particular, the present invention relates to a machine or device for the preparation of stuffed food products. In more detail, the present invention relates to a feeding hopper of the kind used for feeding stuffing machines with soft pastes containing meat or vegetables, such as pastes for mortadella, bologna sausages or stuffed products in general, but also soft pastes comprising vegetables such as soya, gluten or the like. The present invention also relates to a device for processing such soft pastes. Moreover, the present invention relates to stuffing machines for soft pastes comprising meat or vegetables, with said stuffing machines being equipped with such a feeding hopper and/or with such a device. Both the feeding hopper and the stuffing machine according to the present invention allow to obtain stuffed products without holes, voids, air pockets, air bubbles, wrinkles, creases or the like. Moreover, the hopper and the stuffing machine according to the present invention allow to avoid that during the stuffing operation, the fat components of the paste are given a white-like colour, which is particularly disliked or disregarded by the consumers.

The stuffing machines according to the present invention have reduced overall dimensions and are therefore adapted to be used in small rooms or in all those situations in which only a reduced space is available.

Both the hoppers and the stuffing machines according to the present invention allow to simplify the downloading and all discharging operations of the paste; in particular, the paste may be discharged quickly and properly, thus avoiding that residual paste remains in the hopper, for instance adhering to the walls of the hopper. On the contrary, the hoppers according to the present invention may be quickly and completely emptied.

To this end, according to a first embodiment, the present invention relates to a device for processing soft pastes adapted to be fed with said soft pastes and to deliver said soft pastes through a delivering device, comprising advancing means adapted to advance said soft pastes towards said delivering device, wherein said advancing means comprise a first and a second rotating element adapted to be rotated on a first and a second axis of rotation, respectively, so that the rotation of said first rotating element results in the soft pastes being advanced along a first direction Tp substantially parallel to said first axis of rotation, and so that the rotation of said rotating element results in said soft pastes being advanced along a second direction Ts substantially parallel to said second axis of rotation, said first and second rotatable elements being received inside a first and second hollow body, respectively, connected one to each other and having a substantially tubular shape, so that, during rotation of said first and second rotatable elements, said soft pastes are conveyed and/or advanced from said first hollow body into said second hollow body and from said second hollow body to said delivering device, said device comprising means for removing air from said first and second hollow bodies.

According to another embodiment, said first and second hollow bodies are reciprocally connected by means of a tubular element, while said second hollow body is connected to said delivering device by means of a tubular element. Finally, said first hollow body is equipped with a feeding tubular element.

According to a further embodiment, said first and second rotatable elements comprise a first a nd a second screw feeder, respectively, equipped with helicoidal spirals or active turns.

Still according to a further embodiment, some of the spirals or active turns of the first screw feeder are positioned downstream with respect to the feeding tubular element of the first hollow body and have a larger pitch than the spirals or active turns positioned upstream with respect to said tubular feeding element.

According to a further embodiment, also some of the spirals of said second screw feeder are positioned downstream with respect to the tubular connecting element connecting the first and the second hollow body and have a pitch which is larger than the pitch of the spirals positioned upstream with respect to said tubular connecting element.

According to a further embodiment is also possible, said soft pastes are advanced by said first rotatable element along a direction parallel and contrary to the direction along which said soft pastes are advanced by second rotatable advancing element.

A further embodiment of the present invention may also be provided, wherein said first and second rotatable elements are actuated by a common rotatable shaft connected to a power source.

According to still a further embodiment, said first and second rotatable elements are connected to said rotatable shaft through a first and a second transmission shaft, respectively.

According to another embodiment, said means for removing the air from inside said first and second hollow body, comprise, a vacuum pump, adequately connected to said first and second hollow body by means of tubes or pipes.

According to a further embodiment, the present invention relates to a stuffing machine for soft pastes equipped with a device for processing soft pastes according to one of the embodiments described above.

Said stuffing machine may comprise a hopper with a main body adapted to be loaded with said soft pastes and comprising an aperture or mouth through which said soft pastes may be discharged from said main body and conveyed towards said device for processing soft pastes.

Moreover, said main body may have a shape defining a principal discharging direction along which said soft pastes as discharged from said main body; furthermore discharging means may be provided, positioned inside said main body and adapted to discharge said soft pastes from said main body. In particular, said discharging means may comprise a rotatable element.

Alternatively, said discharging means may comprise a hollow body comprising at least one a perture for receiving said soft pastes and at least one aperture for discharging said soft pastes; moreover rotatable advancing means may be provided inside said hollow body for advancing said soft pastes from said first receiving aperture to said second discharging aperture.

According to a further embodiment, said advancing means are actuated by a rotating actuator, adequately connected to a power source such as, for instance, a motor connected to said rotating actuator by means of transmission means.

A further embodiment may be provided, according to which said rotatable actuator comprises a fixed portion and a rotatable portion adapted to be connected to said advancing means.

Moreover, said discharging means may comprise a hollow body having a substantially cylindrical shape while said advancing means may comprise a rotatable screw feeder.

In particular, said rotatable screw feeder may be of the kind comprising a main axis with a rotatable portion adapted to be connected to said rotatable actuator.

It is also possible to provide an embodiment, according to which said hopper comprises conveying means received inside said main body and adapted to convey said soft pastes along said main discharging direction.

Means may also be provided for removing the air from said hollow body, such as for example, a vacuum pump.

The stuffing machine for soft pastes according to the present invention may also be equipped with a rotatable pump comprising blades; for instance, said pump may be connected to said device for processing the soft pastes by means of tubes or pipes.

There is also disclosed a feeding hopper for stuffing machines for soft pastes, comprising a main body with a discharging axis and adapted to be loaded with said soft pastes and comprising means for discharging said soft pastes from said main body; said discharging means have an advancing direction and are received inside said main body so that said discharging direction is substantially parallel to said discharging axis and comprises a hollow body comprising at least one aperture for receiving said soft pastes and at least one aperture for discharging said soft pastes; said discharging means further comprises advancing means received inside said hollow body for advancing said soft pastes from said first receiving aperture to said second discharging aperture.

Said advancing means may be actuated by a rotatable actuator adequately connected to a power source, for instance a motor connected to said rotatable actuator by means of transmission means.

Said rotatable actuator may comprise a fixed portion and a rotatable portion adapted to be connected with said advancing means.

Moreover, said discharging means comprises a hollow body having a substantially cylindrical shape and said discharging means comprises a rotatable screw feeder.

For example, said rotatable screw feeder may be of the kind comprising a principal shaft or axis with an end portion adapted to be connected to said rotatable actuator.

Conveying means may also be provided inside the main body of the hopper, adapted to convey said soft pastes to the at least one receiving aperture of the hollow body, as well as means for removing air from said hollow body, such as for example, a vacuum pump.

### BRIEF DESCRIPTION OF THE DRAWINGS

Further advantages, objects and features of both the hopper and the stuffing machine according to the present invention will become more apparent with the following detailed description of some preferred embodiments when taken with reference to the accompanying drawings in which identical or corresponding parts are identified by the same reference numerals. In particular, in the drawings:
Fig. 1 represents a schematic view of a prior art stuffing machine;
Fig. 2 represents an enlarged view of a particular embodiment of a stuffing machine according to the present invention;
Fig. 3 represents a lateral cross-sectional view of a preferred embodiment of a stuffing machine according to the present invention;
Fig. 4 represents a lateral cross-sectional view of a particular embodiment of a hopper according to the present invention;
Figs. 5a - 5d represent corresponding enlarged views of some component parts of a particular embodiment of the hopper according to the present invention and depict the reciprocal disposition of said component parts;
Fig. 6a represents a lateral cross-sectional view of a particular embodiment of a stuffing machine according to the present invention e quipped with a device for processing soft pastes;
Fig. 6b depicts, in cross-section, a top view of a particular embodiment of a stuffing machine according to the present invention equipped with a device for processing soft pastes;

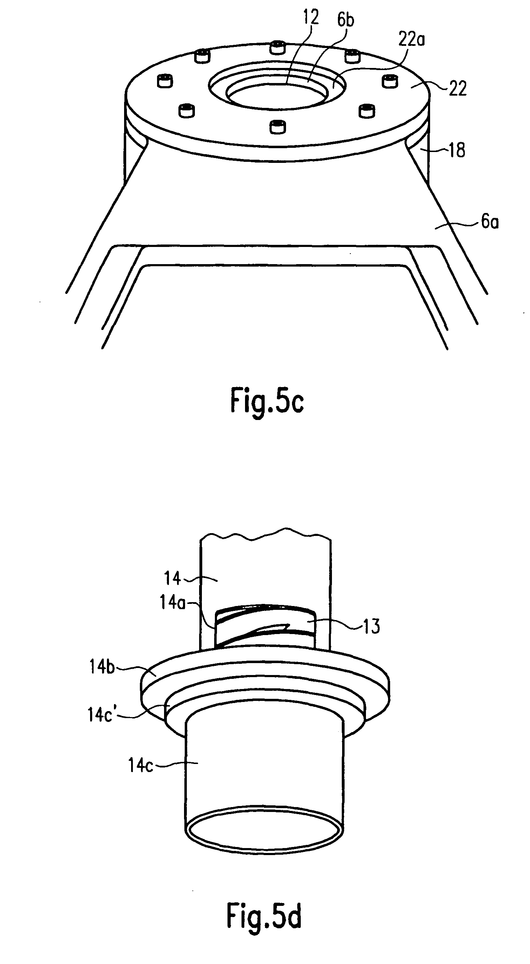

Fig. 5c represents a top view of a particular embodiment of a device according to the present invention for processing soft pastes;

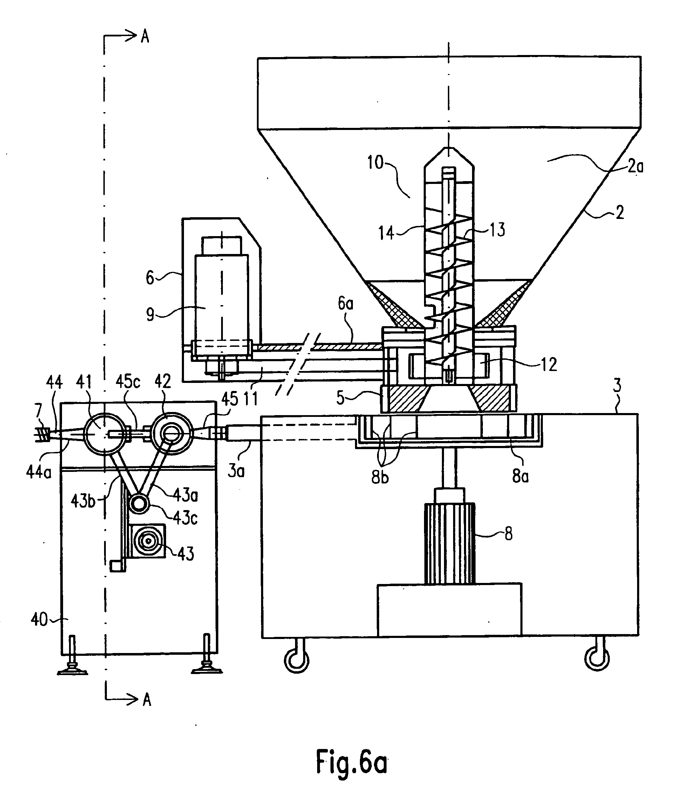

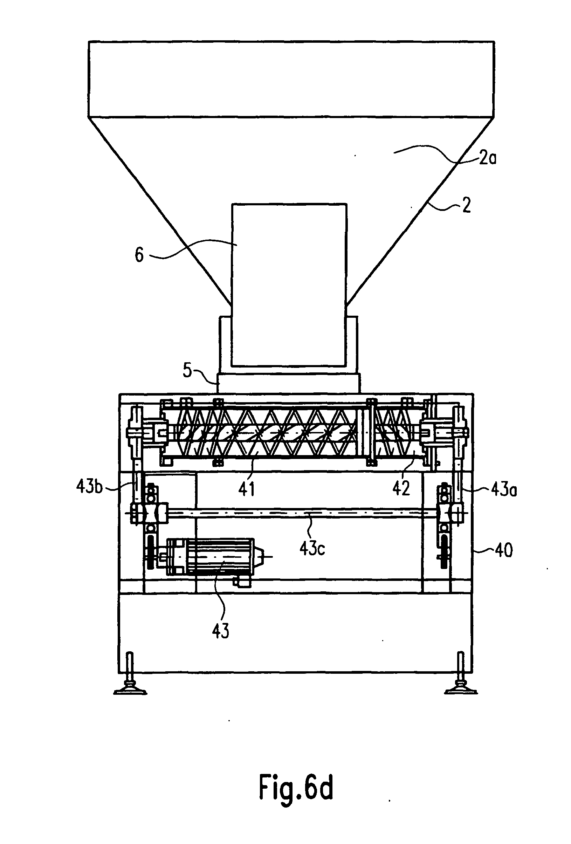

Fig. 6d represents a lateral cross-sectional view along the plane A-A of Fig. 6a of a particular embodiment of a stuffing machine according to the present invention;

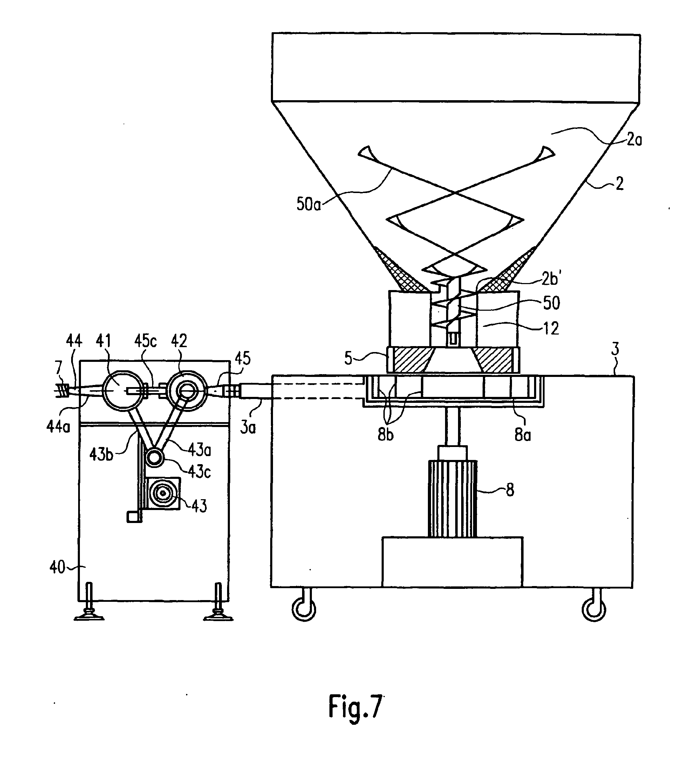

Fig. 7 depicts a cross-sectional view of a further particular embodiment of a stuffing machine according to the present invention.

### DETAILED DESCRIPTION OF THE PRESENT INVENTION

While the present invention is described with reference to the embodiments as illustrated in the following detailed description as well as in the drawings, it should be understood that the following detailed description as well as the drawings are not intended to limit the present invention to the particular illustrated embodiments disclosed, but rather that the described illustrated embodiments merely exemplify various aspects of the present invention, the scope of which is defined by the appended claims.

In the following, a first illustrative embodiment of a stuffing machine for soft pastes according to the present invention will be described with reference to Fig. 2. As depicted in Fig. 2, the stuffing machine 1 is equipped with a hopper 2 comprising a main body 2a having a typical troncoconical reversed shape or, in other words, the shape of a funnel. The main body 2a is adapted to be loaded from the top with soft pastes of the kind used for the production and/or preparation of stuffed food products, such as for example, pork sausages, mortadella or the like, but also soft pastes comprising vegetables, for instance soft pastes used for the production of stuffed products containing soya, gluten or the like.

The main body 2a is disposed on a secondary body 3 from which the paste is emitted through an outlet or delivering tube or horn 3a. As it will become apparent from the following description, a tubular food casing is placed over the tube 3a or fitted on the tube 3a like a sock so that the tubular casing is filled with the paste exiting the secondary body 3 through the outlet tube 3a.

The soft paste loaded into the hopper 2 is discharged or downloaded into the secondary body 3 and emitted through the outlet tube 3a. To this end, the hopper 2 comprises discharging means which will be described in more detail in the following: Moreover, the hopper 2 is placed in correspondence to an inlet aperture (not depicted in Fig. 2) of the secondary body 3.

A panel board 4 is provided on the secondary body 3 for allowing an operator to drive and/or set up the operations.

The hopper 2 is positioned on the base 5 in such a way to be firmly fixed to and connected with said base 5. Obviously, the base 5 also comprises a through aperture for allowing the paste to be discharged from the hopper 2 into the secondary body 3; moreover, the base 5 is connected to the secondary body 3 by means of connecting means 5 and hinges 5b. In this way, by actuating the level 5a it is possible to alternatively connect and disconnect the connecting means 5c so that the base 5 can be rotated, together with the hopper 2, on the hinges 5b. When the hopper 2 is turned over or rotated on the hinges 5b, it is possible to execute an inspection of the component parts received inside the secondary body 3 and placed under or in proximity to the hopper 2. From the following description it will become apparent that said component parts comprise essentially a rotatable pump comprising blades for discharging or emitting the paste from the secondary body 3.

The receiving or housing body 6 is firmly fixed to the hopper 2 by means of supporting means 6a adapted to this end. In particular, the receiving or housing body 6 is provided for the purpose of housing or receiving driving and/or actuating means (to be described in the following) for actuating the discharging means provided inside the hopper 2 for the purpose of discharging the paste from it.

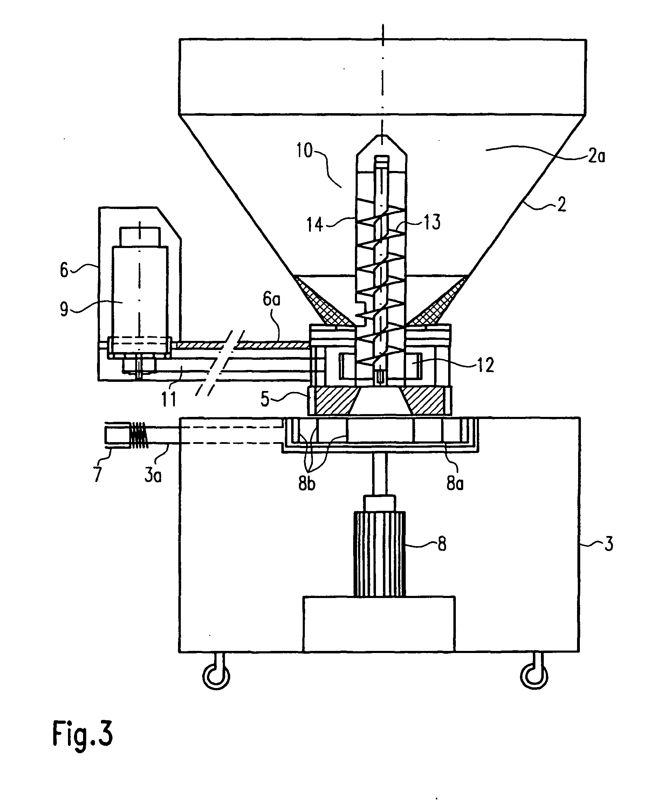

In the following, the main component parts of the hopper and the stuffing machine according to a particular embodiment of the present invention will be described with reference to Fig. 3; in Fig. 3 those parts already described with reference to Fig. 2 are identified by the same reference numerals. Moreover, in Fig. 3, those parts depicted in cross-sectional view are represented on the same plane, namely on the plane of the Figure.

It appears clearly from Fig. 3 that a rotatable pump 8a comprising blades 8b is received inside the secondary body 3. Such a pump 8a is adapted to be fed with the paste exiting the hopper 2 and to emit or deliver the paste through the outlet tube or horn 3a on which a tubular casing 7 has been previously fixed like a sock.

The pump 8a is actuated by actuating means 8 such as, for instance, an oil-pressure motor. Alternatively, an electric motor any other means adapted to this end can be provided along those well known to the skilled person. Vacuum means (not depicted in Fig. 3) are also usually provided for the purpose of removing the air from the pump 8a.

As anticipated above, driving or actuating means 9 are received inside the housing or receiving body 6. The purpose of said additional actuating means is that of actuating advancing means 13 received inside the hollow body 14. Said hollow body 14 and said advancing means 13 belong to discharging means 10 received inside the main body 2a of the hopper 2. The actuating means 9 are connected to rotatable means 12 by means of a driving belt 11. In turn, the rotatable means 12 are adapted to be engaged with said advancing means 13. It appears clearly that, in the same way as in the case of the actuating means 8, several actuating means along those known to the skilled person can be provided for the purpose of rotating the rotatable means 12. For instance, either an oil-pressure motor or an electric motor may be provided to this end. Moreover, driving means other than the driving belt 11 may be provided; for instance, driving means comprising gears adapted to been-gaged with the motor 9 and the rotatable means 12, respectively, may be provided.

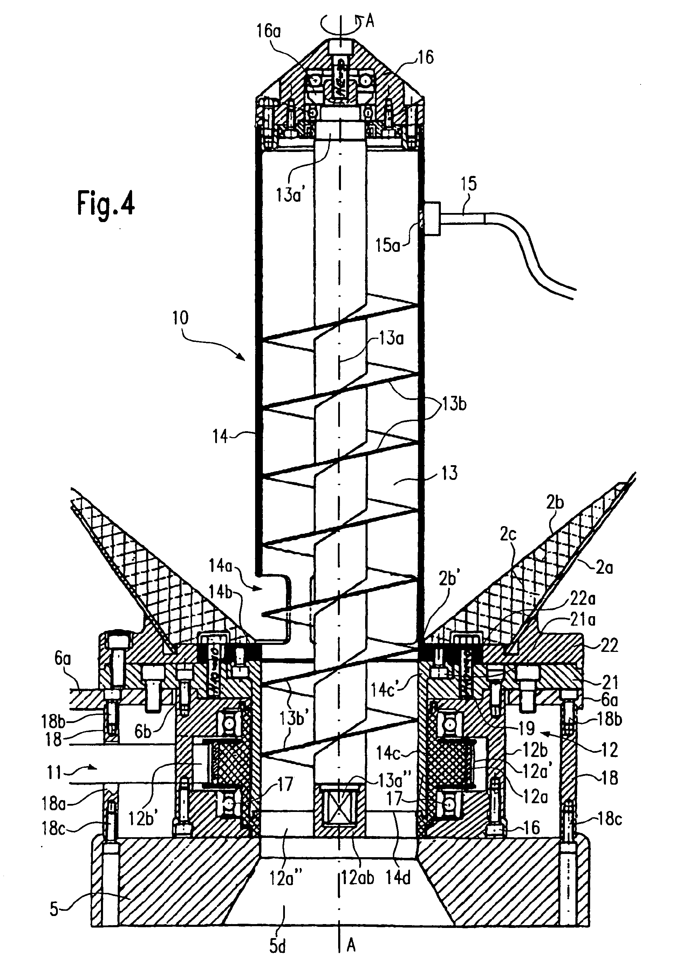

In the following some additional details of a preferred embodiment of the hopper according to the present invention will be described with reference to Fig. 4. In Fig. 4, those parts already described with reference to Figs. 2 and 3 are identified by the same reference numerals.

It appears clearly from Fig. 4 that the advancing means 13 comprise essentially an endless or Archimedean screw received inside a hollow body 14 having a substantially cylindrical shape; said hollow body 14 comprises at least an inlet aperture 14a for allowing the paste previously loaded into the main body 2a to enter into the hollow body 14. Moreover, sliding or guiding means 2b are also received inside the main body 2a for the purpose of facilitating or assisting the paste to enter into the hollow body 14 through the at least one aperture 14a. Also said sliding or guiding means have the typical shape of a reversed truncated cone or, in other words, the shape of a funnel and comprise an aperture 2b' having a shape adapted to allow the sliding means 2b to be engaged with the external surface of the hollow body 14. Accordingly, in the case depicted in Fig. 4, namely in the case that the hollow body 14 has a cylindrical shape, the aperture 2b' has an aperture substantially circular. Filling means 2c are further provided between the sliding or guiding means 2b and the main body 2a for the purpose of filling the space between the sliding or guiding means 2b and the main body 2a. In this way, it is avoided that portions of paste may get trapped in the space between the sliding or guiding means 2b and the main body 2a. Said filling means 2c may comprise several materials such as, for example, resin, rubber material or the like. Moreover, the sliding or guiding means 2b are placed on a flange 14b extending from the external surface of the hollow body 14, so that the aperture 2b' of the sliding or guiding means 2b may be opportunely positioned in correspondence or in proximity to the through aperture 14a. In this way, the descent of the paste along the main body 2a of the hopper 2 is assisted or rendered easy; in the same way, the paste is assisted when entering into the hollow body 14 through the aperture 14a, thus avoiding that portions of paste may accumulate in front of the apertures 14a so as to obstruct the apertures 14a. This solution allows moreover to define a discharging direction of the hopper 2, substantially from the top to the bottom in Fig. 4, namely substantially parallel to the symmetry axis A-A or the main body 2a. This symmetry axis will be in the following also referred to as discharging axis.

Means 15 are also provided for removing the air from the inside of the hollow body 14 through an aperture 15a adapted to this end; for instance, a vacuum pump (not depicted in the Figures) may be provided to this end, as well as any other equivalent means adapted to this end along those known to the person skilled in the art.

The endless or metering screw 13 is maintained in its right position inside the hollow body 14 by means of positioning or supporting means 16 adapted to this end and provided in the upper portion of the hollow body (the top portion in Fig. 4); in particular, said positioning or supporting means comprise bearings 16a adapted to be engaged with the upper end portion 13a' of the rotatable shaft 13a of the screw 13. Said bearings 16a are provided for the purpose of allowing the endless screw 13 to be rotated, avoiding at the same time that the active turns or spirals of the screw may come into contact with the hollow body 14 during rotation, thus causing the endless screw to rub or scrape along the internal surface of the hollow body 14.

The hollow body 14 comprises a lower end portion 14c (on the bottom in Fig. 4). As it will become more apparent from the following description, said lower end portion 14c is placed downstream in the advancing direction of the paste within the hollow body 14, namely the direction in which the paste is advanced by means of the endless or metering screw 13. Inside the lower end portion 14c there are received the lower or downstream spirals 1 3b' of the s crew 1 3 and the lower, downstream portion 13a of the shaft or rod 13a of the screw 13. The expressions lower and/or downstream are used here to identify the end portions on the bottom in Fig. 4 of the shaft rod 1 3a a nd of the spirals or active turns 13b. It appears moreover clearly from Fig. 4 that the lower, downstream portion 14c of the hollow body 14 comprises a flange 14c' adapted to be fixed to the flange 14b of the hollow body 14 by means of fixing means adapted to this end, such as for instance, screws or the like.

It appears moreover from Fig. 4 that the lower, downstream end portion 14c of the hollow body 14 comprises an exit or outlet aperture 14d provided in correspondence with a through aperture 5d of the base 5 on which the hopper 2 is placed. It will therefore be apparent to those skilled in the art that the paste entering the hollow body 14 through the at least one aperture 14a is advanced toward the bottom, downstream end portion 14c of the hollow body 14 by the spirals 13b of the endless or metering screw 13; in particular, the paste is advanced by the screw 13 in the advancing direction indicated by the arrow in Fig. 4 from the at least one aperture 14a until the paste reaches the outlet or exiting aperture 14d. Once the paste has reached the aperture 14d, the paste is discharged from the hopper through the aperture 5d of the base 5 into the secondary body 3 (see Fig. 3). The advancing direction runs substantially parallel to the discharging axis described above of the main body 2a of the hopper 2.

In the following, the operation of the screw 13 will be described together with those component parts by means of which the endless or metering screw 13 is actuated or rotated.

As anticipated above, the screw 13 is rotated by means of rotatable means 12 which are in turn rotated by a driving belt 11 connected to driving means, such as for instance, a motor (see Fig. 3). Said rotatable means or rotatable actuator 1 2 comprises in p articular a rotatable portion 1 2a adapted to be engaged by the driving belt 11. To this end, the rotatable portion comprises engaging means, such as for example, teeth or protuberances 12a'. The rotatable portion 12a is received inside a fixed portion 12b comprising apertures 12b' for allowing the driving belt 11 to engage the engaging means 12a' of the rotatable portion 12a. The fixed portion 12b of the rotatable means 12 is fixed to the base 5 by means of fixing means 16 adapted to this end, such as for example, screws or the like. Bearings 17 are also provided between the rotatable portion 12a and the fixed portion 12b for allowing the rotatable portion 12a to be rotated with respect to the fixed portion 12b. A portion 12a" firmly fixed to the rotatable portions 12a extends diametrically from the internal surface of the rotatable portion, namely from the surface of the rotatable portion facing the screw 13. The portion 12a" is provided in a position immediately below the aperture 14d of the hollow body 14. Said portion 12a" has the shape of a spoke or bar so that the aperture 14d is not obstructed by said portion 12a". Moreover, the portion 12a" comprises a seat 12ab adapted to receive the end portion 13a" of the shaft or rod 13a so that the end portion 13a" of the shaft or rod 13a may be engaged with the portion 12a". It will therefore be apparent that, when the rotatable portion 12a of the rotatable means 12 is rotated by means of the driving means 9 and the driving belt 11, the portion 12a" is rotated together with the rotatable portion 12a so that the screw 13 is also rotated since its shaft or rod 13a is received within the seat or housing 12ab. Rotating the screw 13 results in the paste being advanced from the at least one inlet aperture 14a until to reach the outlet aperture 14d so as to be discharged from the hopper 2.

It appears also clearly from Fig. 4 that the rotatable means 12 are received within a seat or housing 6 b of supporting means 6a. Said supporting means 6a are fixed to a ring 18, for instance by means of screws 18b as depicted in Fig. 4. Said ring 18 comprises an aperture 18a for receiving the transmission belt 11. In turn, the ring 18 is fixed to the base 5, for instance by means of screws 18c or the like, as depicted in Fig. 4.

It is also to be noted that the fixed portion 12b of the rotatable means 12 comprises a receiving seat 19 adapted to receive a ring-shaped protrusion 20 extending from a flange 21 provided on the supporting means 6a and the rotatable means 12. This flange 21 is provided for the purpose of reinforcing the overall structure of the hopper as well as for the purpose of exactly positioning the rotatable means inside the hopper. Moreover, the flange 21 comprises a receiving seat 21a having an annular shape and adapted to receive the flange 14c' extending from the downstream end portion 14c of the hollow body 14. In this way, the several component parts are correctly and reliably positioned, thus avoiding said component parts being moved or misaligned so as to disturb the operations. Finally, a flange 22 is also provided for the purpose of correctly positioning the main body 2a of the hopper 2. Said flange 22 comprises a circular a perture 28 wherein the flange 14b of the hollow body 14 is engaged.

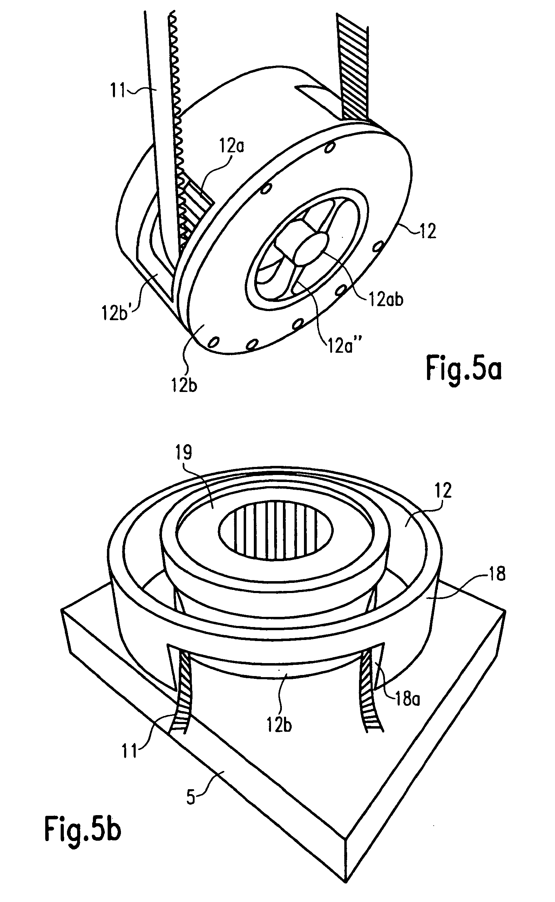

In the following, the reciprocal disposition inside the hopper of some component parts already described with reference to Figs. 2 to 4 will be further clarified with reference to Figs. 5a to 5d.

It appears clear for instance from the enlarged view of Fig. 5a, that the rotatable means 12 comprises an external fixed portion 12b and a rotatable portion 12a received inside said external fixed portion 12b. Moreover, in Fig. 5a there are also depicted the apertures 12b' for receiving the driving belt 11 so as to allow the driving belt 11 to engage the rotatable portion 12a. Depicted in Fig. 5a are also the spoke or bar 12a" firmly fixed to the rotatable portion 12a together with its seat 12ab for receiving the end portion 13a" of the shaft 13a of the endless or metering screw 13.

It also appears clear from Fig. 5b that the rotatable means 12 are placed on the base 5 in such a way to be received within the ring 18 also fixed to the base 5. It is also apparent from Fig. 5b that an aperture 18a is provided in the ring 18 for receiving the driving belt 11. Moreover, in Fig. 5b there is depicted the seat 19 of the rotatable means 12 provided for receiving the protrusion 20 of the flange 21.

With reference to Fig. 5c it can be understood that the supporting means 6 a are placed over the ring 18 and that the rotatable means 12 are received in the aperture 6b. In particular, it appears clearly from Fig. 5c that the supporting means 6a comprises a flange-shaped portion and a fork-shaped portion extending from said flange-shaped portion, with the driving means 9 being placed on said fork-shaped portion together with the cover 6 wherein the driving means are received. As depicted in Fig. 5c, the flange 22 is disposed on the flange-shaped portion of the supporting means 6a, with said flange 22 comprising a receiving seat or aperture 22a, wherein there is received the flange 14c' of the end portion 14c of the hollow body 14.

Finally, in Fig. 5d there are depicted in an enlarged view the hollow body 14 and its downstream end portion 14c, with said hollow body 14 and its downstream end portion 14c being fixed together in correspondence to the flanges 14b, 14c', respectively. Within the hollow body 14 there is received the endless screw 13. Moreover, the hollow body 14 comprises at least one through aperture 14a for allowing the paste inside the main body 2a of the hopper 2 to enter into the hollow body. As anticipated above, the flange 14c' is received within the seat 22a of the flange 22.

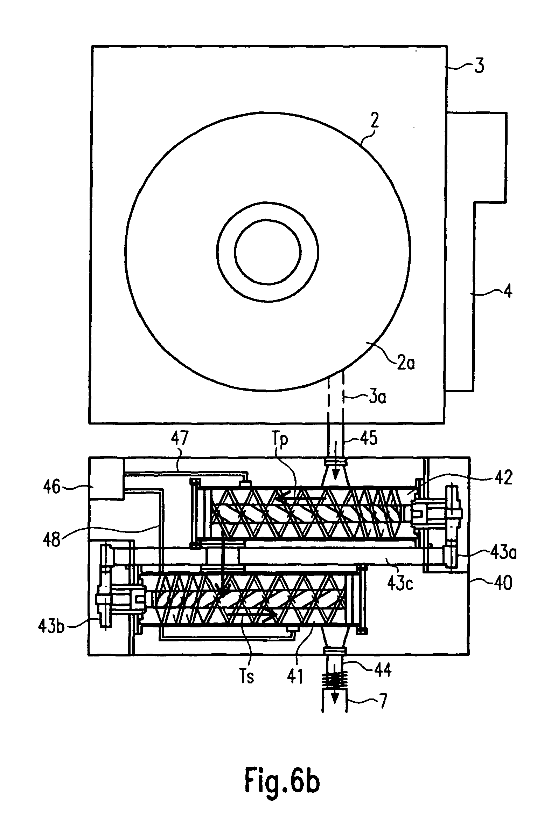

In the following, a further embodiment of the stuffing machine for soft pastes according to the present invention will be described with reference to Figs. 6a and 6b; in Figs. 6a and 6b, those component parts already described with reference to other Figures are identified by the same reference numerals.

The stuffing machine depicted in Figs. 6a and 6b differs from the stuffing machine described above with reference to Figs. 2 and 3 essentially in that the machine of Figs. 6a and 6b is equipped with an additional device 40 for processing soft pastes previously loaded into the main body 2a of the hopper 2, from which said pastes are conveyed toward the device 40. To this end, the device 40 comprises advancing means 42, 41 inside of which the soft pastes are further processed and advanced; moreover, by means of said advancing means 42, 41, the soft pastes are conveyed towards an outlet or delivering device 44, on which a tubular casing 7 has been previously fitted like a sock. In this way, the tubular casing 7 is filled with the soft pastes exiting the outlet device 44, so that the soft pastes are stuffed a nd food products such as salami, mortedella or the like are prepared. It appears clear from Fig. 6a that the advancing means 42 are connected to the exit tube or horn 3a of the secondary body 3 by means of a tubular connecting element 45; moreover the advancing means 42, 41 are reciprocally connected by means of a second tubular connecting element 45c. Finally, the advancing means 41 are connected to the outlet device 44 by means of a third tubular connecting element 44a. It will therefore be apparent to those skilled in the art, that in the stuffing machine depicted in Fig. 6a, the soft pastes exiting the secondary body 3 through the tube or horn 3a are first conveyed into the advancing means 42, then into the advancing means 41, subsequently towards the outlet or delivering device 44 and finally into the tubular casing 44. As it will become more apparent from the description of the device 40 to be given in the following with reference to Figs. 6b - 6d, the advancing means 42, 41 are equipped with rotating elements (not depicted in Fig. 6a) received inside the advancing means 42, 41 and adapted to advance the soft pastes inside said advancing means. As depicted in Fig. 6a, said rotating elements are actuated by means of a power source 43. In particular, the power source 43, for instance an electric motor or any other kind of motor adapted to this end, is connected to a rotatable shaft 43c adapted to be rotated on a rotating axis perpendicular to the plane of Fig. 6a. In turn, the rotatable shaft 43c is connected to the rotatable elements received inside the advancing means 42, 41 by means of transmission shafts 43a, 43b. Alternatively, the transmission shafts 43a, 43b may be replaced by other transmission elements, such as for example, transmission belts or the like.

In the following, further component parts and/or features of the device 40 for processing s oft pastes will be described with reference to Fig. 6b; in Fig. 6b, the device 40 is depicted in combination with a stuffing machine of the kind described above. However, in Fig. 6b, for reasons of clarity, the housing 6 for the power source 9 has been omitted.

It appears clear from the top, partial cross-sectional view of Fig. 6b that the soft pastes exiting the secondary body 3 through the exit tube 3a are conveyed into the device 4o (ie. into the advancing means 42, 41) through the connecting tube or pipe 45 and then towards the outlet nozzle 44 along the path depicted by the arrows in Fig. 6b. It appears clear moreover from Fig. 6b that the advancing means 42, 41 comprise a first and a second screw feeder (to be described in more detail in the following), received inside said advancing means 42, 41. It arises therefore that the rotation of the two screw feeders results in the soft pastes being advanced inside the advancing means and conveyed towards the nozzle 44. It has been verified that the reciprocal disposition of the advancing means 42, 41 depicted in Fig. 6b, together with the fact that the soft pastes are advanced or conveyed along the path depicted by the arrows, allows to obtain pastes particularly homogenous. In Fig. 6b there are moreover schematically depicted means adapted to remove air eventually trapped in the pastes when the pastes are moved along the path from the hopper 2 to the outlet or delivering nozzle or device 44. Said means comprise essentially a vacuum pump 46 connected to the advancing means 42, 41 by means of tubes or pipes 47, 48, respectively. The vacuum pump 46 may be actuated by the same power source 43 (see Fig. 6a) provided for actuating the rotating shaft 43. Alternatively, an additional power source may be provided (not depicted in Fig. 6b) such as for example, an electric motor. As it t will become more apparent from the following description, the duty of removing the air from the soft pastes represents a very important aspect of the present invention. It has indeed been verified that very good and satisfactory results may be obtained in this sense by means of the device 40.

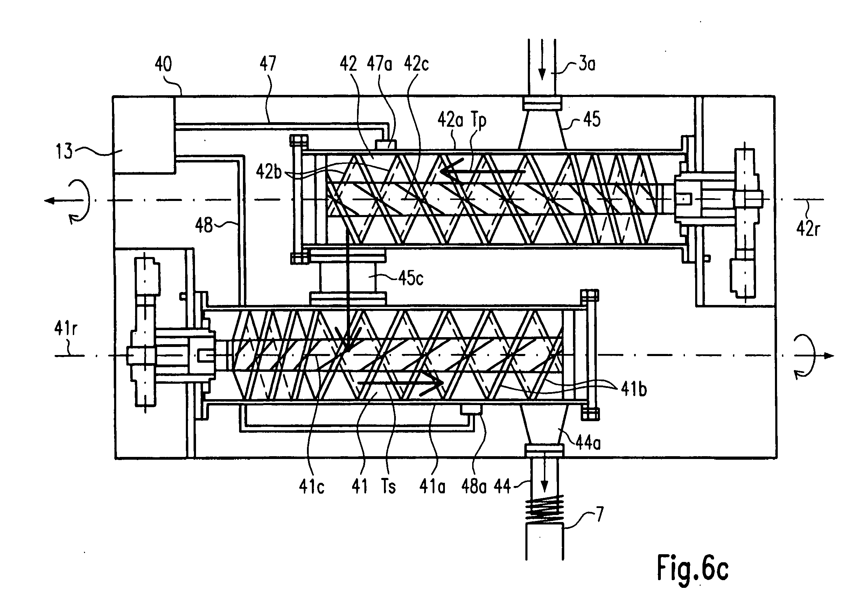

Further details of the device 40 will be described in the following with reference to Fig. 6c.

From Fig. 6c it appears clearly that the advancing means 42, 41 comprise a first and a second hollow body 42a, 41a, respectively; moreover, as depicted in Fig. 6c, said hollow bodies 42a, 41 a have a substantially tubular or cylindrical shape. Inside said hollow bodies 42a, 41 a there are received a first and a second rotatable element 42c, 41c, respectively. In particular, in the embodiment depicted in Fig. 6c, said first and second rotatable elements 42c, 41c comprise essentially a first and a second screw feeder, respectively. It has however to be noted that other different rotatable elements along those known to the person skilled in the art may be provided inside the hollow bodies 42a, 41 a, respectively, for the purpose of advancing the soft pastes inside the hollow bodies 42a, 41a. Each of the first and second screw feeders 42c, 41c comprises essentially a longitudinal shaft on which there are provided helicoidal spirals or active turns; moreover, said first and second screw feeders are adapted to be rotated on a first and a second rotational axis 42r, 41 r, respectively. It will be therefore clear to the person skilled in the art that, by means of rotation of the screw feeder 42c on its own rotating axis 42r, the soft pastes are advanced inside the hollow body 42a of the advancing means 41 along a direction substantially parallel to the axis of rotation 42r. The soft pastes are thus conveyed through the tubular connecting element 45c from the hollow body 42a into the hollow body 41 a and then advanced inside the hollow body 41a by the screw feeder 41c along a direction substantially parallel to the axis of rotation 41 of said screw feeder 41c. When the hollow bodies 42a, 41a are reciprocally positioned as schematically depicted in Fig. 6c, the soft pastes are advanced therefore along two directions substantially parallel and contrary as indicated by the arrows in Fig. 6c. Said reciprocal disposition is usually preferred for those applications for which a device 40 is required, having reduced overall dimensions; however, a different reciprocal disposition than that depicted in Fig. 6c is also possible for the advancing means 42, 41. For instance, it is possible to dispose the advancing means 42, 41 in such a way that the soft pastes are advanced along two parallel directions and in the same direction or sense. Alternatively, the reciprocal disposition of the advancing means 42, 41 may be such that the soft pastes are advanced along two directions which are not parallel.

It is also possible to appreciate from Fig. 6c that some of the spirals or turns of the screw feeder 42c, namely the spirals or turns placed downstream with respect to the inlet or feeding tube 45 in the advancing direction of the soft pastes, have a pitch which is larger than that of the spirals or turns of the screw feeder 42c placed upstream with respect to the tube 45. In other words, the distance between two consecutive spirals placed downstream with respect to the tube 45 is larger than the distance between two consecutive spirals placed upstream with respect to the feeding or inlet tube 45. This solution is adapted to the end of avoiding that the soft pastes (or portions of them) conveyed inside the hollow body 42a through the feeding tube 45 may reflow or be moved in a direction contrary to the advancing direction Tp indicated by the arrow and advance towards the end portion of the hollow body 42a placed upstream with respect to the feeding tube 45. In fact, if that would happen, portions of the soft pastes could remain trapped inside the hollow body 42a; the trapped portions of the soft pastes could therefore become rancid so that the quality of the stuffed products could become poor.

In the same way, the spirals or turns 41b of the screw feeder 41c placed downstream with respect to the connecting tube or pipe 45c have a larger pitch than the spirals or turns situated upstream with respect to the connecting pipe or tube 45c. Also this solution is provided for the purpose of avoiding soft pastes reflowing or being moved in a direction contrary to the advancing direction Ts indicated by the arrow, namely toward the end portion of the hollow body 41a placed upstream with respect to the connecting pipe 45c, so as to avoid that portions of the soft pastes may remain trapped inside the end portion of the hollow body 41 a.

In Fig. 6c, there are also depicted in detail the means for removing the air from the hollow bodies 42a, 41a. As anticipated above, said means comprise a vacuum pump 46 connected to the hollow body 42a by means of a first tube or pipe 47 and to the hollow body 41 a by means of a second tube or pipe 48. In particular, the vacuum pump 46 is adapted to remove the air from the hollow body 42a through a first aperture 47a, provided in the hollow body 42a and to which the pipe 47 is connected. In the same way, the air is removed from the hollow body 41a through an aperture 48a provided in the hollow body 41a and to which the tube or pipe 48 is connected. According to a preferred embodiment, the aperture 47a is provided in the hollow body 42a in a position between the feeding tube 45 and the connecting tube 45c; in the same way, and still according to a preferred embodiment, the aperture 48a is provided in the hollow body 41 a between the connecting pipe 45c and the exit tube 44a. Int his way, it is obtained that the air is removed from the hollow bodies and from the soft paste advanced inside and along them.

In Fig. 6d there is depicted a lateral cross-sectional view along the plane A-A of Fig. 6c of a stuffing machine according to the present invention. In particular, it appears clear from Fig. 6d that the device 40 for processing the soft pastes described above may be used in combination with a hopper 2 of the kind described with reference to Fig. 3; said hopper comprises means for discharging soft pastes previously loaded into it, wherein said discharging means are actuated by a power source received in a housing 6. In Fig. 6b there are schematically depicted the rotating shaft 43c, the power source 43 and the transmissions 43a, 43b adapted to rotate the screw feeders received inside the advancing means 42, 41.

In the following, with reference to Fig. 7, a further embodiment of the stuffing machine according to the present invention will be described.

As is apparent from Fig. 7, also the stuffing machine depicted in Fig. 7 is equipped with a device 40 of the kind described above for processing and advancing soft pastes. However, the stuffing machine depicted in Fig. 7 differs from the stuffing machine described above in that other discharging means, differing from those described above with reference to Figs. 3 - 5d are received inside the main body 2a of the hopper 2. In particular, the discharging means schematically depicted in Fig. 7 comprises a rotating element 50 adapted to be actuated by a power source adapted to this end, for instance by an electric motor (not depicted in Fig. 7). Said rotating element and/or device comprises essentially an end portion shaped like a screw feeder and adapted to be received inside the discharging or outlet aperture or mouth of the hopper 2; levers 50a extend from said screw feeder shaped end portion so that said levers 50a are situated inside the main body 2a of the hopper 2. Said levers 50a are adapted to move the soft pastes inside the main body 2a so as to allow said soft pastes to descend towards the discharging aperture or mouth of the hopper. This solution may be preferred in those circumstances in which soft pastes characterized by very high consistence and density may be processed, since said consistent soft pastes could not be efficiently conveyed in the hollow body of the kind described above with reference to Figs. 3 - 5d. The levers 50a may extend to a total length until in proximity of the internal surface of the hollow body 2a so as to scrape paste from the internal surface of the hollow body 2a, thus avoiding residual portions of soft paste may remain tacked to the main body 2a or even suspended inside it.

It has however to be noted that, in the case of very fluid paste, namely in the case of paste adapted to descend inside the hopper towards it discharging aperture under action of gravity force, the discharging means described above may be omitted.

It has therefore been demonstrated that the hopper and the stuffing machine according to the present invention allow to overcome the problems and inconveniences affecting the prior art machines. In fact, the embodiment of the present invention according to which discharging means are provided inside the funnel-shaped main body of the hopper, allows to drastically reduce the overall dimensions of the hopper, thus avoiding that the hopper becomes very bulky and thus allowing the hopper to be used in combination with little or very little stuffing machines, particularly appreciated when only small rooms are at disposal.

Moreover, the device for processing and advancing soft pastes according to the present invention allows to remove more efficiently the air from the soft pastes, thus overcoming the problem that the final stuffed products may comprise holes or voids.

Finally, it has also been demonstrated that the hopper according to the present invention, when used in combination with stuffing machines equipped with a rotating pump, for instance a positive-displacement pump, allows said pump to be more efficiently fed.

It is to be noted that a wide range of changes and modifications can be made to the embodiments described above without leaving the scope of the present invention. It is therefore to be understood that all the claims are intended to define the scope of the present invention.

## Claims

1. Device (40) for processing soft pastes adapted to be fed with said soft pastes and to deliver said soft pastes through a delivering device (44), comprising advancing means (42, 41) adapted to advance said soft pastes towards said delivering device (44), wherein said advancing means comprise a first and a second rotating element (42c, 41c) adapted to be rotated on a first and a second axis of rotation (42r, 41r), respectively, so that the rotation of said first rotating element (42c) results in the soft pastes being advanced along a first direction Tp substantially parallel to said first axis of rotation (42r), and so that the rotation of said rotating element (42c) results in said soft pastes being advanced along a second direction Ts substantially parallel to said second axis of rotation (41 r), said first and second rotatable elements (42c, 41c) being received inside a first and second hollow body (42a, 41a), respectively, connected one to each other and having a substantially tubular shape, so that, during rotation of said first and second rotatable elements (42c, 41c), said soft pastes are conveyed and/or advanced from said first hollow body (42a) into said second hollow body (41a) and from said second hollow body (41a) to said delivering device (44);
**characterized in that,**
said device comprises means for removing air from both said first and second hollow bodies (42a, 41 a).

2. Device as claimed in claim 1,
**characterized in that**,
said means for removing air comprise a vacuum pump (46) adequately connected to said first and second hollow bodies (42a, 41 a) by means of tubes or pipes (47, 48).

3. Device as claimed in one of claims 1- 2,
**characterized in that**,
said first and second hollow bodies (42a, 41a), are connected one to each other by means of a tubular element (45c), **in that** said second hollow body (41a) is connected to said delivering device (44) by means of a tubular element (44a) and **in that** said first hollow body (42a) is provided with a feeding tubular element (45).

4. Device as claimed in one of claims 1 to 3,
**characterized in that**,
said first and second rotatable elements (42c, 41c) comprise a first and second screw feeder, respectively, equipped with helicoidal spirals (42b, 41 b).

5. Device as claimed in claims 3 to 4, in combination,
**characterized i**n **that,**
some of the spirals (42b) of the first screw feeder (42c) are positioned downstream with respect to the tubular feeding element (45) of the first hollow body (42a) and have a larger pitch than the spirals positioned upstream with respect to said tubular feeding element (45).

6. Device as claimed in claims 3 and 4, in combination or in claim 5,
**characterized in that**,
some of the spirals (41b) of said second screw feeder (41c) are positioned downstream with respect to the tubular element (45c) connecting the first and the second hollow bodies (42a, 41a) and have a larger pitch than the spirals positioned upstream with respect to said tubular connecting element (45c).

7. Device as claimed in one of claims 1 to 6,
**characterized in that,**
said soft pastes are advanced by said first rotatable element (42c) along a direction substantially parallel and contrary to the direction along which soft pastes are advanced by said second rotatable element (41c).

8. Device as claimed in one of claims 1 to 7,
**characterized in that,**
said first and second rotatable elements (42c, 41c) are actuated by a common rotatable shaft (43c) connected to a power source (43).

9. Device as claimed in claim 8,
**characterized in that**,
said first and second rotatable elements (42c, 41c) are connected to said rotatable shaft (43c) by means of a first and second transmission shaft (43a, 43b), respectively.

10. Stuffing machine for soft pastes,
**characterized in that,**
said machine is equipped with a device (40) for processing said soft pastes as claimed in one of claims 1 to 9.

11. Machine as claimed in claim 10,
**characterized in that**,
said machine comprises a hopper (2) with a main body (2a) adapted to be loaded with said soft pastes and comprising at least one aperture through which said soft pastes may be discharged from said main body and conveyed toward said device (40) for processing soft pastes.

12. Machine as claimed in claim 11,
**characterized in that**,
said main body has a shape defining a principal discharging direction along which said soft pastes are discharged from said main body (2a) and **in that** discharging means are received inside main body (2a) and adapted to discharge said soft pastes from said main body (2a).

13. Machine as claimed in claim 12,
**characterized in that**,
said discharging means comprise at least a rotatable element (50a).

14. Machine as claimed in claim 12,
**characterized in that**,
said discharging means comprise a hollow body (14) comprising at least one aperture (14a) for receiving said soft pastes and at least one aperture (14b) for discharging said soft pastes, and rotatable advancing means (13) received inside said hollow body (14) for advancing said soft pastes from said at least one first receiving aperture (14a) to said at least one second discharging aperture (14b).

15. Machine as claimed in claim 14,
**characterized in that**,
said advancing means (13) are actuated by a rotatable actuator (12) adequately connected to a power source (9).

16. Machine as claimed in claim 15,
**characterized in that**,
said power source (9) comprises a motor connected to said rotatable actuator (12) by means of transmission means (11).

17. Machine as claimed in one of claims 15 and 16,
**characterized in that**,
said rotatable actuator (12) comprises a fixed portion (12b) and a rotatable portion (12a) adapted to be engaged with said advancing means (13).

18. Machine as claimed in one of claims 14 to 17,
**characterized in that**,
said discharging means comprise a hollow body having a substantially cylindrical shape and **in that** said advancing means comprise a screw feeder.

19. Machine as claimed in claim 18,
**characterized in that**,
said screw feeder comprises a main shaft (13a) with an end portion (13a") adapted to be engaged with said rotatable actuator (12).

20. Machine as claimed in one of claims 12 to 19,
**characterized in that**,
said hopper (2) comprises a sliding or guiding means (2b) received inside said main body (2a) and adapted to convey said soft pastes along said discharging direction.

21. Machine as claimed in one of claims 14 to 20,
**characterized in that**,
said hopper comprises means adapted to remove air from said hollow body (14).

22. Machine as claimed in claim 21,
**characterized in that**,
said means for removing air comprises a vacuum pump.

23. Machine as claimed in one of claims 10 to 22,
**characterized in that**,
said machine comprises a rotatable pump (8a) comprising blades (8b).

24. Machine as claimed in claim 23,
**characterized in that**,
said rotatable pump (8a) is connected to said device (40) for processing soft pastes by means of a tube or pipe (3a).

## Patentansprüche

1. Vorrichtung (40) zum Verarbeiten weicher Pasten, die so eingerichtet ist, dass sie mit den weichen Pasten gespeist wird und die weichen Pasten über eine Abgabevorrichtung (44) abgibt, wobei sie eine Transporteinrichtung (42, 41) umfasst, die zum Transportieren der weichen Pasten in Richtung der Abgabeeinheit (44) eingerichtet ist, und die Transporteinrichtung ein erstes sowie ein zweites sich drehendes Element (42c, 41 c) umfasst, die so eingerichtet sind, dass sie auf einer ersten bzw. einer zweiten Drehachse (42r, 41 r) gedreht werden, so dass die Drehung des ersten sich drehenden Elementes (42c) dazu führt, dass die weichen Pasten entlang einer ersten Richtung Tp transportiert werden, die im Wesentlichen parallel zu der Drehachse (42r) ist, und so dass die Drehung des sich drehenden Elementes (42c) dazu führt, dass die weichen Pasten entlang einer zweiten Richtung Ts transportiert werden, die im Wesentlichen parallel zu der zweiten Drehachse (41 r) ist, wobei das erste und das zweite drehbare Element (42c, 41 c) im Inneren eines ersten bzw. eines zweiten Hohlkörpers (42a, 41 a) aufgenommen sind, die miteinander verbunden sind und eine im Wesentlichen röhrenartige Form haben, so dass während der Drehung des ersten und des zweiten drehbaren Elementes (42c, 41c) die weichen Pasten aus dem ersten Hohlkörper (42a) in den zweiten Hohlkörper (41 a) und aus dem zweiten Hohlkörper (41 a) zu der Abgabevorrichtung (44) gefördert und/oder transportiert werden;
**dadurch gekennzeichnet, dass**
die Vorrichtung eine Einrichtung zum Entfernen von Luft sowohl aus dem ersten als auch dem zweiten Hohlkörper (42a, 41 a) umfasst.

2. Vorrichtung nach Anspruch 1,
**dadurch gekennzeichnet, dass**
die Einrichtung zum Entfernen von Luft eine Vakuumpumpe (46) umfasst, die mittels Röhren oder Rohren (47, 48) in geeigneter Weise mit dem ersten und dem zweiten Hohlkörper (42a, 41 a) verbunden ist.

3. Vorrichtung nach einem der Ansprüche 1-2,
**dadurch gekennzeichnet, dass**
der erste und der zweite Hohlkörper (42a, 41 a) mittels eines röhrenförmigen Elementes (45c) miteinander verbunden sind, dass der zweite Hohlkörper (41 a) mit der Abgabeeinrichtung (44) mittels eines röhrenförmigen Elementes (44a) verbunden ist und dass der erste Hohlkörper (42a) mit einem zuführenden röhrenförmigen Element (45) versehen ist.

4. Vorrichtung nach einem der Ansprüche 1 bis 3,
**dadurch gekennzeichnet, dass**
das erste und das zweite drehbare Element (42c, 41c) einen ersten bzw. einen zweiten Schneckenförderer umfassen, die mit Schraubenwendeln (42b, 41 b) versehen sind.

5. Vorrichtung nach den Ansprüchen 3 bis 4 in Kombination,
**dadurch gekennzeichnet, dass**
einige der Wendeln (42b) des ersten Schneckenförderers (42c) in Bezug auf das röhrenförmige Speiseelement (45) des ersten Hohlkörpers (42a) stromab angeordnet sind und eine größere Steigung haben als die Wendeln, die in Bezug auf das röhrenförmige Speiseelement (45) stromauf angeordnet sind.

6. Vorrichtung nach den Ansprüchen 3 bis 4 in Kombination oder nach Anspruch 5,
**dadurch gekennzeichnet, dass**
einige der Wendeln (41 b) des zweiten Schneckenförderers (41 c) in Bezug auf das röhrenförmige Element (45b), das den ersten und den zweiten Hohlkörper (42a, 41 a) verbindet, stromab angeordnet sind und eine größere Steigung haben als die Wendeln, die in Bezug auf das röhrenförmige verbindende Element (45c) stromauf angeordnet sind.

7. Vorrichtung nach einem der Ansprüche 1 bis 6,
**dadurch gekennzeichnet, dass**
die weichen Pasten durch das erste drehbare Element (42c) in einer Richtung im Wesentlichen parallel und entgegengesetzt zu der Richtung transportiert werden, entlang der die weichen Pasten durch das zweite drehbare Element (41 c) transportiert werden.

8. Vorrichtung nach einem der Ansprüche 1 bis 7,
**dadurch gekennzeichnet, dass**
das erste und das zweite drehbare Element (42c, 41 c) durch eine gemeinsame drehbare Welle (43c) betätigt werden, die mit einer Energiequelle (43) verbunden ist.

9. Vorrichtung nach Anspruch 8,
**dadurch gekennzeichnet, dass**
das erste und das zweite drehbare Element (42c, 41 c) mit der drehbaren Welle (43c) mittels einer ersten bzw. einer zweiten Übertragungswelle (43a, 43b) verbunden sind.

10. Füllmaschine für weiche Pasten,
**dadurch gekennzeichnet, dass**
die Maschine mit einer Vorrichtung (41) zum Verarbeiten der weichen Pasten nach einem der Ansprüche 1 bis 9 ausgestattet ist.

11. Maschine nach Anspruch 10,
**dadurch gekennzeichnet, dass**
die Maschine einen Beschickungsbehälter (2) mit einem Hauptkörper (2a) umfasst, der so eingerichtet ist, dass er mit den weichen Pasten gefüllt wird, und wenigstens eine Öffnung umfasst, über die die weichen Pasten aus dem Hauptkörper ausgegeben und in Richtung der Vorrichtung (40) zum Verarbeiten weicher Pasten gefördert werden können.

12. Maschine nach Anspruch 11,
**dadurch gekennzeichnet, dass**
der Hauptkörper eine Form hat, die eine Haupt-Ausgaberichtung definiert, entlang der die weichen Pasten aus dem Hauptkörper (2a) ausgegeben werden, und dass eine Ausgabeeinrichtung im Inneren des Hauptkörpers (2a) aufgenommen und zum Ausgeben der weichen Pasten aus dem Hauptkörper (2a) eingerichtet ist.

13. Maschine nach Anspruch 12,
**dadurch gekennzeichnet, dass**
die Ausgabeeinrichtung wenigstens ein drehbares Element (50a) umfasst.

14. Maschine nach Anspruch 12,
**dadurch gekennzeichnet, dass**
die Ausgabeeinrichtung einen Hohlkörper (14), der wenigstens eine Öffnung (14a) zum Aufnehmen der weichen Pasten und wenigstens eine Öffnung 14b) zum Ausgeben der weichen Pasten umfasst, sowie eine drehbare Transporteinrichtung (13) umfasst, die im Inneren des Hohlkörpers (14) aufgenommen ist, um die weichen Pasten über die wenigstens eine erste Aufnahmeöffnung (14a) zu der wenigstens einen zweiten Ausgabeöffnung (14b) zu transportieren.

15. Maschine nach Anspruch 14,
**dadurch gekennzeichnet, dass**
die Transporteinrichtung (13) durch ein drehbares Betätigungselement (12) betätigt wird, das in geeigneter Weise mit einer Energiequelle (9) verbunden ist.

16. Maschine nach Anspruch 15,
**dadurch gekennzeichnet, dass**
die Energiequelle (9) einen Motor umfasst, der mittels einer Übertragungseinrichtung (11) mit dem drehbaren Betätigungselement (12) verbunden ist.

17. Maschine nach einem der Ansprüche 15 und 16,
**dadurch gekennzeichnet, dass**
das drehbare Betätigungselement (12) einen stationären Abschnitt (12b) und einen drehbaren Abschnitt (12a) umfasst, die zum Eingriff mit der Transporteinrichtung (13) eingerichtet sind.

18. Maschine nach einem der Ansprüche 14 bis 17,
**dadurch gekennzeichnet, dass**
die Ausgabeeinrichtung einen Hohlkörper mit einer im Wesentlichen zylindrischen Form umfasst, und dass die Transporteinrichtung einen Schneckenförderer umfasst.

19. Maschine nach Anspruch 18,
**dadurch gekennzeichnet, dass**
der Schneckenförderer eine Hauptwelle (13a) mit einem Endabschnitt (13a") umfasst, der zum Eingriff mit dem drehbaren Betätigungselement (12) eingerichtet ist.

20. Maschine nach einem der Ansprüche 12 bis 19,
**dadurch gekennzeichnet, dass**
der Beschickungsbehälter (2) eine Gleit- oder Führungseinrichtung (2b) umfasst, die im Inneren des Hauptkörpers (2a) aufgenommen und zum Fördern der weichen Pasten entlang der Ausgaberichtung eingerichtet ist.

21. Maschine nach einem der Ansprüche 14 bis 20,
**dadurch gekennzeichnet, dass**
der Beschickungsbehälter eine Einrichtung umfasst, die zum Entfernen von Luft aus dem Hohlkörper (14) eingerichtet ist.

22. Maschine nach Anspruch 21,
**dadurch gekennzeichnet, dass**
die Einrichtung zum Entfernen von Luft eine Vakuumpumpe umfasst.

23. Maschine nach einem der Ansprüche 10 bis 22,
**dadurch gekennzeichnet, dass**
die Maschine eine drehbare Pumpe (8a) umfasst, die Flügel (8b) umfasst.

24. Maschine nach Anspruch 23,
**dadurch gekennzeichnet, dass**
die drehbare Pumpe (8a) mit der Vorrichtung (40) zum Verarbeiten weicher Pasten mittels einer Röhre oder eines Rohrs (3a) verbunden ist.

## Revendications

1. Dispositif (40) destiné à traiter des pâtes souples, adapté pour être alimenté en pâtes souples et pour fournir lesdites pâtes souples au moyen d'un dispositif de livraison (44), comprenant des moyens d'avancée (42, 41) adaptés pour faire avancer lesdites pâtes souples vers ledit dispositif de livraison (44), dans lequel lesdits moyens d'avancée comprennent un premier et un second élément de rotation (42c, 41c) adapté pour être tourné sur un premier et un second axe de rotation (42r, 41r), respectivement, de manière à ce que la rotation dudit premier élément de rotation (42c) ait pour conséquence l'avancée des pâtes souples le long d'une première direction Tp sensiblement parallèle audit premier axe de rotation (42r), et de manière à ce que la rotation dudit élément de rotation (42c) ait pour conséquence l'avancée desdites pâtes souples le long d'une seconde direction Ts sensiblement parallèle audit second axe de rotation (41r), lesdits premier et second éléments de rotation (42c, 41c) étant reçus à l'intérieur d'un premier et d'un second corps creux (42a, 41a), respectivement, connectés l'un à l'autre et se présentant sous une forme sensiblement tubulaire, de manière à ce que, au cours de la rotation desdits premier et second éléments de rotation (42c, 41c), lesdites pâtes souples soient transportées et/ou avancées à partir dudit premier corps creux (42a) jusque dans ledit second corps creux (41a) et à partir dudit second corps creux (41a) jusqu'audit dispositif de livraison (44) ;
**caractérisé en ce que**
ledit dispositif comprend des moyens destinés à retirer l'air à la fois dudit premier et dudit second corps creux (42a, 41a).

2. Dispositif selon la revendication 1,
**caractérisé en ce que**
lesdits moyens destinés à retirer l'air comprennent une pompe à vide (46) connectée de façon adéquate auxdits premier et second corps creux (42a, 41a) au moyen de tubes ou de tuyaux (47, 48).

3. Dispositif selon l'une quelconque des revendications 1 à 2,
**caractérisé en ce que**
lesdits premier et second corps creux (42a, 41a) sont connectés l'un à l'autre au moyen d'un élément tubulaire (45c), **en ce que** ledit second corps creux (41a) est connecté audit dispositif de livraison (44) au moyen d'un élément tubulaire (44a) et **en ce que** ledit premier corps creux (42a) est muni d'un élément tubulaire d'alimentation (45).

4. Dispositif selon l'une quelconque des revendications 1 à 3,
**caractérisé en ce que**
lesdits premier et second éléments de rotation (42c, 41c) comprennent une première et une seconde vis de distribution, respectivement, équipées d'hélices hélicoïdales (42b, 41b).

5. Dispositif selon les revendications 3 à 4, en association,
**caractérisé en ce que**
certaines des hélices (42b) de la première vis de distribution (42c) sont positionnées en aval par rapport à l'élément tubulaire d'alimentation (45) du premier corps creux (42a) et ont un pas plus grand que celui des hélices positionnées en amont par rapport audit élément tubulaire d'alimentation (45).

6. Dispositif selon les revendications 3 et 4, en association, ou selon la revendication 5,
**caractérisé en ce que**
certaines des hélices (41b) de ladite seconde vis de distribution (41c) sont positionnées en aval par rapport à l'élément tubulaire (45c) connectant les premier et second corps creux (42a, 41a) et ont un pas plus grand que celui des hélices positionnées en amont par rapport audit élément tubulaire de connexion (45c).

7. Dispositif selon l'une quelconque des revendications 1 à 6,
**caractérisé en ce que**
lesdites pâtes souples sont avancées au moyen dudit premier élément de rotation (42c) le long d'une direction sensiblement parallèle et dans le sens contraire de la direction le long de laquelle les pâtes souples sont avancées au moyen dudit second élément de rotation (41c).

8. Dispositif selon l'une quelconque des revendications 1 à 7,
**caractérisé en ce que**
lesdits premier et second éléments de rotation (42c, 41c) sont actionnés au moyen d'un arbre de rotation commun (43c) connecté à une source d'énergie (43).

9. Dispositif selon la revendication 8,
**caractérisé en ce que**
lesdits premier et second éléments de rotation (42c, 41c) sont connectés audit arbre de rotation (43c) au moyen d'un premier et d'un second arbre de transmission (43a, 43b), respectivement.

10. Machine de bourrage pour des pâtes souples,
**caractérisée en ce que**
ladite machine est équipée d'un dispositif (40) destiné à traiter lesdites pâtes souples selon l'une quelconque des revendications 1 à 9.

11. Machine selon la revendication 10,
**caractérisée en ce que**
ladite machine comprend une trémie (2) avec un corps principal (2a) adapté pour recevoir lesdites pâtes souples et comprenant au moins une ouverture au travers de laquelle lesdites pâtes souples peuvent être évacuées dudit corps principal et transportées vers ledit dispositif (40) destiné à traiter les pâtes souples.

12. Machine selon la revendication 11,
**caractérisée en ce que**
ledit corps principal a une forme définissant une direction d'évacuation principale le long de laquelle lesdites pâtes souples sont évacuées dudit corps principal (2a) et **en ce que** des moyens d'évacuation sont reçus à.l'intérieur du corps principal (2a) et adaptés pour évacuer lesdites pâtes souples depuis ledit corps principal (2a).

13. Machine selon la revendication 12,
**caractérisée en ce que**
lesdits moyens d'évacuation comprennent au moins un élément de rotation (50a).

14. Machine selon la revendication 12,
**caractérisée en ce que**
lesdits moyens d'évacuation comprennent un corps creux (14) comprenant au moins une ouverture (14a) destinée à recevoir lesdites pâtes souples et au moins une ouverture (14b) destinée à évacuer lesdites pâtes souples, et des moyens d'avancée de rotation (13) reçus à l'intérieur dudit corps creux (14) destinés à faire avancer lesdites pâtes souples depuis ladite au moins une première ouverture de réception (14a) jusqu'à ladite au moins une seconde ouverture d'évacuation (14b).

15. Machine selon la revendication 14,
**caractérisée en ce que**
lesdits moyens d'avancée (13) sont actionnés au moyen d'un actionneur de rotation (12) connecté de façon adéquate à une source d'énergie (9).

16. Machine selon la revendication 15,
**caractérisée en ce que**
ladite source d'énergie (9) comprend un moteur connecté audit actionneur de rotation (12) par des moyens de transmission (11).

17. Machine selon l'une quelconque des revendications 15 et 16,
**caractérisée en ce que**
ledit actionneur de rotation (12) comprend une partie fixe (12b) et une partie de rotation (12a) adaptées pour être mises en prise avec lesdits moyens d'avancée (13).

18. Machine selon l'une quelconque des revendications 14 à 17,
**caractérisée en ce que**
lesdits moyens d'évacuation comprennent un corps creux se présentant sous une forme sensiblement cylindrique et **en ce que** lesdits moyens d'avancée comprennent une vis de distribution.

19. Machine selon la revendication 18,
**caractérisée en ce que**
ladite vis de distribution comprend un arbre principal (13a) muni d'une partie d'extrémité (13a") adaptée pour être mise en prise avec ledit actionneur de rotation (12).

20. Machine selon l'une quelconque des revendications 12 à 19,
**caractérisée en ce que**
ladite trémie (2) comprend des moyens coulissants ou de guidage (2b) reçus à l'intérieur dudit corps principal (2a) et adaptés pour transporter lesdites pâtes souples le long de ladite direction d'évacuation.

21. Machine selon l'une quelconque des revendications 14 à 20,
**caractérisée en ce que**
ladite trémie comprend des moyens adaptés pour retirer l'air dudit corps creux (14).

22. Machine selon la revendication 21,
**caractérisée en ce que**
lesdits moyens destinés à retirer l'air comprennent une pompe à vide.

23. Machine selon l'une quelconque des revendications 10 à 22,
**caractérisée en ce que**
ladite machine comprend une pompe rotative (8a) comprenant des lames (8b).

24. Machine selon la revendication 23,
**caractérisée en ce que**
ladite pompe rotative (8a) est connectée audit dispositif (40) destiné à traiter des pâtes souples au moyen d'un tube ou d'un tuyau (3a).
